(19) **Europäisches Patentamt**

**European Patent Office**

**Office européen des brevets**

(11) **EP 1 613 097 A1**

(12) **EUROPEAN PATENT APPLICATION**

(43) Date of publication:
**04.01.2006 Bulletin 2006/01**

(51) Int Cl.:
**H04N 7/46** *(2006.01)*

(21) Application number: **05447161.0**

(22) Date of filing: **28.06.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventor: **van Belle, Ronny**<br>**8860 Lendelede (BE)** |
| (30) Priority: **01.07.2004  US 883572** | (74) Representative: **Bird, Ariane et al**<br>**Bird Goën & Co**<br>**Klein Dalenstraat 42A**<br>**3020 Winksele (BE)** |
| (71) Applicant: **BARCO N.V.**<br>**8500 Kortrijk (BE)** | |

(54) **Digital video signal compression and decompression method and apparatus**

(57)    Compression and decompression of video image data involves removing data (230) representing pixels from a field to leave data representing pixels adjacent and on both sides of the removed pixels in at least two directions. Different pixels are removed from different fields so that over a given number of consecutive fields, there is remaining data representing all the pixels. For decompression, interpolation (250) uses a statistical combination of the remaining data representing the remaining pixels on both sides in the two directions, and uses remaining data for a corresponding pixel from a different field. Such decimation can retain more information, and statistical interpolation can enable data reconstruction with fewer artifacts and less blurring of edges and lines, without heavy processing requirements. The interpolation can be motion sensitive. The chrominance can be decimated to a lower resolution and/or coarser quantization level.

| Y' (0,0) | | Y' (0,2) | | Y' (0,4) | | Y' (0,6) | |
|---|---|---|---|---|---|---|---|
| | Y' (1,1) | | Y' (1,3) | | Y' (1,5) | | Y' (1,7) |
| Y' (2,0) | | Y' (2,2) | | Y' (2,4) | | Y' (2,6) | |
| | Y' (3,1) | | Y' (3,3) | | Y' (3,5) | | Y' (3,7) |
| Y' (4,0) | | Y' (4,2) | | Y' (4,4) | | Y' (4,6) | |
| | Y' (5,1) | | Y' (5,3) | | Y' (5,5) | | Y' (5,7) |
| Y' (6,0) | | Y' (6,2) | | Y' (6,4) | | Y' (6,6) | |
| | Y' (7,1) | | Y' (7,3) | | Y' (7,5) | | Y' (7,7) |

Figure 6

**Description**

**Field of the invention:**

This invention relates to apparatus and methods and software for video image data compression and decompression.

**Description of the Related Art:**

It is known to use compression of video data and corresponding decompression (expansion) to achieve a higher image resolution after transmission through an interconnection path of limited bandwidth or to enable storage in a memory device having limited storage capacity. Two known examples are as follows.

1) DVI is a well-known interconnection standard to connect an image source (such as a PC graphic card or a professional image generator) to a display device (such as a TFT flat screen monitor or a projector). The DVI standard works well for resolutions up to 1600 x 1200 pixels with 24 bits per pixel at 60 Hz (true color UXGA) because the conventional method transmits 8bit per color per pixel per frame.

2) Many digital video-processing applications are known which require one or more frame buffers to temporarily store video or computer graphics data to perform functions such as image resizing, warping, noise reduction and de-interlacing. In many of those applications a very fast multiple port memory architecture is required and the storage capacity of such memories plays an important part in the overall system cost. The image resolution or other performance criteria for a given cost may be limited by the frame buffer size, or the rate at which the image data can be accessed for reading from or writing to the frame buffers. In this case the storage capacity or the link or datapath for transmitting the data between the processing circuitry and the frame buffers can act as a bottleneck, even if the link extends over only a short distance, even millimetres.

Known methods of compressing image data to achieve higher quality image transmission have been based on the following factors:

- The perceived image resolution. The number of pixels required depends on the display size and the viewing distance.
- The color reproduction accuracy per pixel is mainly determined by the primary color coordinates and the color compression method. In case of RGB data, the number of bits per channel as well as the linearity relation between the digital data and the light output, the so-called gamma-function, is important.
- The frame rate is important for moving images. The image refresh rate in combination with the display technology being used determines the motion reproduction quality.

When any of the above mentioned parameters is reduced (number of pixels, number of colors, refresh rate) then the image quality is affected. Many techniques have been developed to reduce the data rate of the video data stream for many such applications.

Many "lossless" and "lossy" compression techniques are known. Lossless techniques allow the recovery of the original signal after decompression, but only modest compression ratios (<3:1) are achievable. Among the lossless techniques are: Discrete Cosine Transform (DCT), Variable Length Coding (VLC, also called Huffman coding and entropy coding, it takes into consideration the probability of identical amplitude values in a picture and assigns short code words to values with a high probability of occurrence and long code words to others), and Run Length Coding (RLC, which generates special codes to indicate the start and the end of a string of repeated values). Lossy techniques cause information to be lost and the original image can only be approximately reconstructed. Combining several data reduction techniques enables considerably higher compression ratios (from 3:1 to 100:1) but is an irreversible process. Among the lossy techniques are: Subsampling, (a very effective method of lossy data reduction, is often applied to chrominance signals resulting in such sampling schemes as 4:2:2, 4:1:1 and 4:2:0, and a special video conferencing subsampling scheme, called Common Source Intermediate Format (CSIF), subsamples luminance as well as chrominance), Differential Pulse Code Modulation (DPCM a predictive encoding scheme that transmits the sample-to-sample difference rather than the full sample value), and Requantization (a process of reassigning the available number of bits per sample in a manner that increases the quantizing noise of imperceptible picture details).

Taken separately none of these techniques can generate a significant data reduction. The various known MPEG video compression techniques combine several techniques to achieve a more efficient data reduction system, for example the well-known intra-coded (I), predicted (P) and bidirectionally-coded (B) pictures approach, but at a cost of heavy data processing requirements.

Examples of some known techniques using simpler processing, include:

- Frame skipping. By reducing the effective frame rate from 60 Hz to 15 Hz, a 4 times higher resolution can be achieved with the same bandwidth. In many applications, such as almost static PC images or advertising, this is perfectly acceptable when the low frame rate is converted back to 60 Hz or whatever is best for the used display technology by using frame repeat.
- Interlacing. This method is used to virtually maintain the frame resolution while reducing the data rate by a factor of 2. This is done by introducing a field sequence. Each image frame is split into an odd and an even field. The odd field only contains the data from the odd lines, the even frame contains the even lines. The process to recover the original image frames is called de-interlacing and this works perfectly for still images. With well-designed algorithms that include high quality filters and motion detectors, a high quality reconstruction is possible, even with moving images. De-interlacing should be considered as a smart combination of frame rate compression and resolution compression.
- Color encoding. As the human eye is more sensitive to luminance information, many techniques compress the color information while preserving the luminance information of images. For example, when using Yuv encoding, it is possible to compress the u and v components by reducing their resolution. This can be done as follows. The luminance component Y is sampled each pixel, but the chrominance components u and v are sampled alternately. This method is well known in the industry and is called Yuv 4:2:2 encoding.
- Reducing the number of colors. By reducing the number of bits per pixel to 16 (high color) instead of 24 (true color), the video data format needs only 1 word per pixel to store the image.

While the above techniques have proven to be useful in many situations, none of them can be considered as a solution for today's most high-end applications.

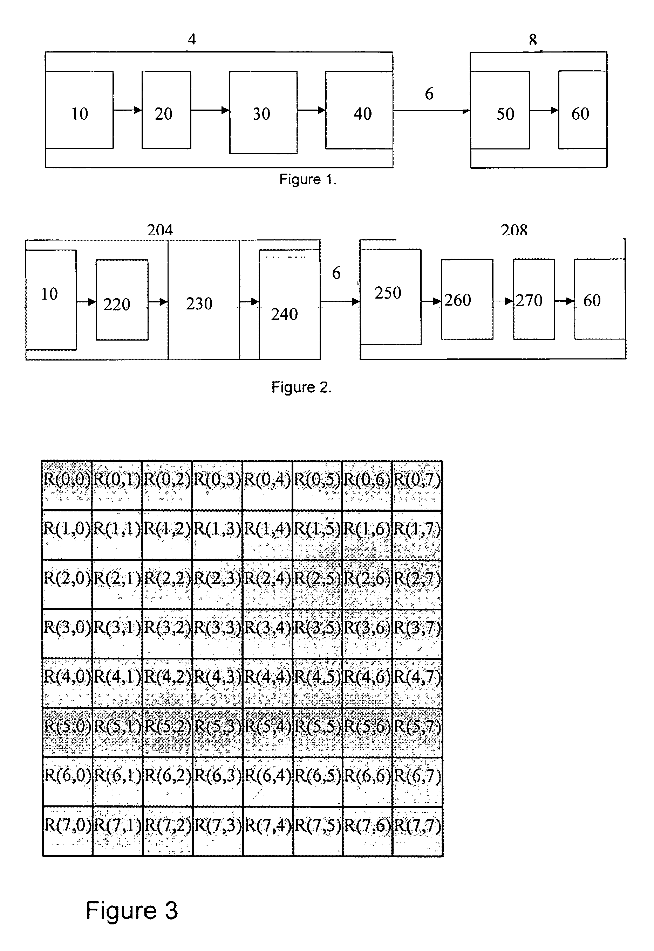

The following example shown in fig. 1 illustrates a known example of using compression to improve the picture quality of an existing system. It shows a PC or IG Graphical card 4 coupled by a DVI cable to a video projector. Many graphical cards calculate internal image resolutions higher than the output resolution, i.e. 3200 by 2400 pixels, e.g. RGB pixels, for a typical 1600 by 1200 output. However, before the image 10, being e.g. the original rendered image, is transmitted to the DVI or the analog output 40, the image is filtered by filter 20, which may blur the image, and decimated by subsampler 30 to achieve an output resolution of 1600 by 1200 pixels (UXGA). This step is necessary in the graphical card to provide high quality imagery as part of an anti-aliasing technique. The display device 60 receives only 1600 by 1200 pixels, e.g. being RGB 4:4:4 data, via the DVI link 6, and an image processing part 50 in the video projector 8, thus much of the original information inside the graphical card is lost. Here the graphical card is linked to a projector device 8 and transmits 8 bits per color per pixel to the video projector device, so the required bandwidth is 24 bits per pixel.

The interconnection between the two devices can be the main limiting factor to achieving higher picture qualities. The original rendered image has to be blurred to reduce/eliminate aliasing artifacts when decimating the image. As this reduces the image resolution that can be received by the projector device, it limits the overall picture quality of the entire system.

**Summary of the Invention:**

An object of the invention is to provide improved apparatus or methods for display of images.

An aspect of the present invention is to provide apparatus for compression and/or decompression of video image data which comprises a decimator for carrying out compression to provide a decimation pattern and/or a statistical reconstruction filter to avoid reconstruction errors on edges especially moving edges.

According to one aspect of the present invention an apparatus for compression of video image data is provided, having:

- a decimator for carrying out compression by removing data representing pixels or clusters of pixels from a field of the video image data such that, away from a periphery of the field, there remain data representing pixels adjacent and on both sides of the removed pixels or removed clusters of pixels in at least two substantially orthogonal directions in an x,y co-ordinate frame, and such that different pixels are removed from different fields so that over a given number of consecutive fields, there is remaining data representing all the pixels.

According to another aspect of the present invention an apparatus for decompression of compressed video image data is provided, the apparatus comprising:

means for receiving compressed data, the compression having been performed by removing data representing pixels or clusters of pixels from a field of the video image data such that, away from a periphery of the field, there remain data representing pixels adjacent and on both sides of the removed pixels or removed clusters of pixels in at least two substantially orthogonal directions in an x,y co-ordinate frame, and such that different pixels are removed from different fields so that over a given number of consecutive fields, there is remaining data representing all the pixels, and
an interpolator for carrying out at least partial decompression and arranged to interpolate using a statistical combination of the remaining data representing the remaining pixels on both sides in the two directions, and using remaining data for a corresponding pixel from a different field. The interpolator may be arranged to interpolate using the remaining data representing the remaining pixels on both sides in the two directions and using remaining data for a corresponding pixel from a different field, according to image motion.

The present invention also provides an apparatus for decompression of compressed video image data, having:

- means for receiving compressed data whereby the compression has been performed by removing data representing pixels or clusters of pixels from a field of the video image data such that, away from a periphery of the field, there remain data representing pixels adjacent and on both sides of the removed pixels or removed clusters of pixels in at least two substantially orthogonal directions in an x,y co-ordinate frame, and such that different pixels are removed from different fields so that over a given number of consecutive fields, there is remaining data representing all the pixels, and
- an interpolator for carrying out at least partial decompression and arranged to interpolate using the remaining data representing the remaining pixels on both sides in the two directions, and using remaining data for a corresponding pixel from a different field, according to image motion.

According to a further aspect, the invention provides apparatus for compression and decompression of video image data, having:

- a decimator for carrying out the compression by removing data representing pixels or clusters of pixels from a field of the video image data such that, away from a periphery of the field, there remain data representing pixels adjacent and on both sides of the removed pixels or removed clusters of pixels in at least two substantially orthogonal directions in an x,y co-ordinate frame, and such that different pixels are removed from different fields so that over a given number of consecutive fields, there is remaining data representing all the pixels, and
- an interpolator for carrying out at least partial decompression, arranged to interpolate using a statistical combination of the remaining data representing the remaining pixels on both sides in the two directions, and using remaining data for a corresponding pixel from a different field.

The interpolator may be arranged to interpolate using the remaining data representing the remaining pixels on both sides in the two directions and using remaining data for a corresponding pixel from a different field, according to image motion. Such decimation can retain more information and so can enable better interpolation. Statistical interpolation is one way of enabling the additional information to be exploited. It can enable data reconstruction with fewer artifacts and less blurring. In particular, edges and lines can be reproduced more faithfully, to give a better "virtual resolution" of images. Hence greater compression can be achieved, which can lead to greater display resolution or smaller frame buffer memory requirements for example. And this can be achieved without the heavy processing requirements of some known compression and decompression methods.
The above apparatus is particularly suitable for non-interlaced formats.
According to yet a further aspect, the invention provides apparatus for compression and decompression of video image data, having:

- a decimator for carrying out the compression by removing data representing pixels or clusters of pixels from a field of the video image data such that, away from a periphery of the field, there remain data representing pixels adjacent and on both sides of the removed pixels or removed clusters of pixels in at least two substantially orthogonal directions in an x,y co-ordinate frame, and such that different pixels are removed from different fields so that over a given number of consecutive fields, there is remaining data representing all the pixels, and
- an interpolator for carrying out at least partial decompression and arranged to interpolate using the remaining data representing the remaining pixels on both sides in the two directions, and using remaining data for a corresponding pixel from a different field, according to image motion.

The above apparatus is particularly suitable for non-interlaced formats.
The decimation can retain more information than other types of decimation, and so can enable better interpolation. Motion sensitive interpolation is one way of enabling the additional information to be exploited to give an image which appears to have less artifacts and blurring. This exploits the known feature of human vision that it is less sensitive to lower image resolution in moving images. Hence greater compression can be achieved, which can lead to greater display resolution or smaller frame buffer memory requirements for example. And this can be achieved without the heavy processing requirements of some known compression and decompression methods.

It is not essential for the decompression to correspond to the compression, the decompression can be a partial decompression to an intermediate resolution for display or transmission or other purposes. An additional feature for a dependent claim is the video image data having separate color video image data in different colors without luminance-only video image data, the apparatus having a luminance/chrominance converter for converting the color video image data into luminance video image data and chrominance video image data for feeding to the decimator, and the decimator being arranged to decimate the luminance video image data and the chrominance video image data separately.

This is useful to enable the decimation to be optimized for each type of video image data. For example the chrominance can be decimated to a lower resolution and/or coarser quantization level, since human vision is known to be less sensitive to chrominance resolution or quantization level. This can enable greater compression of the video image data.

Another such additional feature is the decimation being arranged remain data representing pixels adjacent and on both sides of the removed pixels or removed clusters of pixels in three substantially orthogonal directions in an x,y,t co-ordinate frame.

An advantage of this is that interpolation can be made in all three directions, or in two directions selected from the three.

Another such additional feature is the interpolator being arranged to use a statistical combination of at least a median of the data representing the neighboring pixels on both sides in two directions.

This can enable edges and lines to be reproduced more faithfully than conventional filter methods, to enable a greater virtual resolution.

Another such additional feature is the statistical combination additionally using an average of these neighboring pixels.

Another such additional feature is the decimation being dependent on motion in the image.

This can enable for example a greater inter frame time period between remaining neighboring pixels in a time direction, where there is little or no motion.

Another such additional feature is the compression being carried out without luminance channel interlacing.

Another such additional feature is the compression being carried out without chrominance channel interlacing.

Another such additional feature is the two chrominance channels being in phase. Another such additional feature is the decimation and interpolation being arranged in two directions in one plane.

Another such additional feature is the decimation and interpolation being extended to a factor greater than 2.

Another such additional feature is circuitry for converting the decimated video image data into a signal for transmission along a DVI link.

Such systems can transfer a virtually quadrupled resolution compared with the conventional RGB interconnection method for the same data rate/bandwidth.

This virtually quadrupled resolution (VQR) mode can achieve a higher picture quality while maintaining the restrictions of an interconnection device such as a DVI cable or a memory buffer.

This VQR encoding method can produce better results than conventional filtering and subsampling of RGB video data in both still images and moving images.

The system can be arranged to fit well with existing computer graphics methods where high-resolution images are first rendered and then decimated prior to display. The embodiments can carry the preexisting data in the computer image generator through the entire processing chain of the display device while maintaining maximum image content throughout all processing stages up to final output where the processed image is generally down sampled by filtering to eliminate aliasing that caused by sampling effects inherent to the computer image generation process.

The embodiments of the invention described below can uniquely combine aspects of the above mentioned known techniques in combination with (optional) statistical filtering to effectively increase the resolution by a factor of 4 using existing physical interconnections with limited bandwidth. Embodiments of the current invention can enable transmission of images as large as 3200 x 2400 pixels (or even more) over a DVI link while virtually maintaining the color reproduction accuracy and the frame rate by using a new color compression and expansion method and device. This can overcome the bandwidth limitation of such a DVI link and can virtually quadruple the transmittable number of pixels for any given data rate or bandwidth.

The current invention can be used in digital video-processing applications to compress video data transmitted to or from the frame buffers, to enable higher image resolutions to be handled with the same memory amount or to lower the system cost while virtually maintaining the image resolution limitations. In some embodiments of the invention, a link may not be realized in traditional forms. The link could be as simple as a data path to a memory.

Other aspects of the invention include corresponding apparatus for compressing video image data, corresponding apparatus for decompressing video image data, methods of compressing or decompressing video image data, software for implementing such methods, a carrier medium storing the software for implementing such methods, methods of producing compressed video image data, and methods of producing decompressed video image data.

Any of the additional features can be combined together and combined with any of the aspects. Other advantages will be apparent to those skilled in the art, especially over other prior art. Numerous variations and modifications can be made without departing from the claims of the present invention. Therefore, it should be clearly understood that the form of the present invention is illustrative only and is not intended to limit the scope of the present invention.

**Brief Description of the Drawings:**

How the present invention may be put into effect will now be described by way of example with reference to the appended drawings, in which:

Fig. 1 shows a system using known compression, for reference,
Fig. 2 shows an embodiment of the invention,
Figs. 3 and 4 shows part of an image before and after subsampling according to a known method,
Figs. 5 and 6 show part of an image of an odd field before and after subsampling according to an embodiment of the invention,
Figs. 7 and 8 show part of an image of an even field before and after subsampling according to an embodiment of the invention,
Fig. 9 shows a part of the chrominance data of an image of an odd field before and after subsampling according to an embodiment of the invention
Fig. 10 shows a part of the luminance data of an image of an odd field before and after subsampling according to an embodiment of the invention,
Figs. 11 and 12 show a chrominance part of part of an image of an even field before and after subsampling according to an embodiment of the invention,
Figs. 13 and 14 show a luminance part of part of an image of an even field before and after interpolation according to an embodiment of the invention,
Figs. 15 and 16 show a luminance part of part of an image having an edge, before and after subsampling according to an embodiment of the invention,
Figs. 17 and 18 show a luminance part of part of an image having a line, before and after subsampling according to an embodiment of the invention,
Figs. 19 and 20 show a luminance part of part of an image having an edge, before and after subsampling and interpolation according to a known method,
Figs. 21 and 22 show a luminance part of part of an image having a line, before and after subsampling and interpolation according to a known method,
Figs. 23 to 26 show a luminance part of part of an image having an edge and a line respectively, after subsampling and interpolation for odd and even fields according to an embodiment,
Figs. 27 and 28 show a chrominance part of part of an image of an even field and an odd field respectively after subsampling according to an embodiment of the invention,
Fig. 29 shows an example of a motion detector, and
Fig. 30 shows an example of an interpolator using a motion detector, according to an embodiment of the present invention.
Fig. 31 shows a computing means as can be used for applying the methods according to different embodiments of the present invention.

**Description of the Preferred Embodiments:**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn to scale for illustrative purposes. Where an indefinite or definite article is used when referring to a singular noun e.g. "a" or "an", "the", this includes a plural of that noun unless something else is specifically stated.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

A first embodiment of the invention, illustrated in Fig. 2 shows the following system components according to an embodiment of the current invention. Again it shows a graphical card 204, e.g. PC graphical card, coupled via a DVI cable to a video projector 208.

**The RGB to Yuv converter** 220 in the graphical card is used if the original high-resolution image 10 (i.e. 3200 x 2400 pixels) is rendered in RGB mode. This converter is a standard component with 3 inputs (R,G,B) and 3 outputs (Y,u,v). The outputs are a linear combination of the inputs, for instance $Y = r*R + g*G + b*B$. Each of the color components (R, G and B) is multiplied by a unique coefficient. Any accuracy of these coefficients is valid for the purpose of this invention. The following examples are valid equations for Y:

$$\text{Example 1: } Y = 0{,}3*R + 0{,}59*G + 0{,}11*B$$

$$\text{Example 2: } Y = 0{,}25*R + 0{,}5*G + 0{,}25*B$$

Although the first example is more preferred, the second equation can be applied for the purpose of the current invention. The same statement is true for the chrominance signals u and v.

For the purpose of the invention, it is not necessary that the source image is RGB encoded. If the original image uses a different encoding such as HSI, La*b*, etc., an equivalent converter is required. It is not essential that the RGB data (or any other format) have 8 bits per component. Any number of bits per component (i.e. 10 or 12 bits) can be used with the current invention.

**The Yuv subsampler** 230 is an example of a decimator, and is used for compression at the transmitter side, which can comprise for instance an IG (image generator) or a PC graphical card or any other video source. Its purpose is to reduce the original high-resolution data stream by a factor of 4 (other factors are possible). Such a Yuv subsampler 230 may provide a color encoded dot line pattern per frame inverted Yuv subsampling. The same factor of 4 can be achieved by the conventional filtering method based on RGB video data. Here a unique method is used that separately decimates the luminance (Y) and the chrominance (u,v) data. It uses alternating patterns as described in more detail below. Although not necessary, in some applications the quality can be further improved by using a conventional FIR filter (finite impulse response) on the original image data prior to the decimation process. In many practical systems such a filter is already included to improve the quality of the conventional surface mapping process. The optimal filter depends on the type of image data.

**The (digital) link** comprises a DVI connector 240 at the graphical card, which is an example of circuitry for converting the decimated video image data into a signal for transmission along a DVI link, e.g. a 3200x2400 Yuv pixel true color image data in 8:2:2 format. This link connects the transmitter device (i.e. graphical card) with the receiving device (i.e. video projector). This can be any type of (existing) interface, including the popular DVI or PanelLink interface. Although not preferable, the digital interface can be replaced by an analog link using a digital to analog converter at the transmitting device and an analog to digital converter at the receiving device.

**The Yuv upsampler** 250 is an example of an interpolator. It uses a digital filter to reconstruct the original data. A statistical filter may be used. This is preferably done using motion adaptive techniques as the best algorithm depends on whether the image is moving or not as described further on in this paper. An example of such a (statistical) filter is described below as well as some examples of the quality that can be expected when using such a reconstruction filter. It will be explained that embodiments of the current invention can achieve a higher luminance positioning accuracy while virtually maintaining all color details compared with the conventional RGB transmission method for a given data rate (bandwidth).

**The Yuv to RGB converter** 260 is used if it is necessary to send the data in RGB mode to the display device 60 via an image DSP 270. This converter is a standard component with 3 inputs (Y,u,v) and 3 outputs (R,G,B). The outputs are a linear combination of the inputs. It is not necessary for this invention that the final output is RGB. Any convenient color space or encoding may be used.

Embodiments of the current invention use a high quality method to encode the video data at the source (in the example above, the graphical card) and to reconstruct the original high-resolution image at the destination (in the example the video projector). As illustrated in fig. 2, the embodiment uses the Yuv video data format instead of the commonly used RGB format when transmitting data via a DVI link.

The **virtually quadrupled resolution (VQR mode)** is achieved by subsampling the original Yuv image (3200x2400 pixels in this example) in a special technique to reduce the bandwidth according to, for example, DVI limitations.

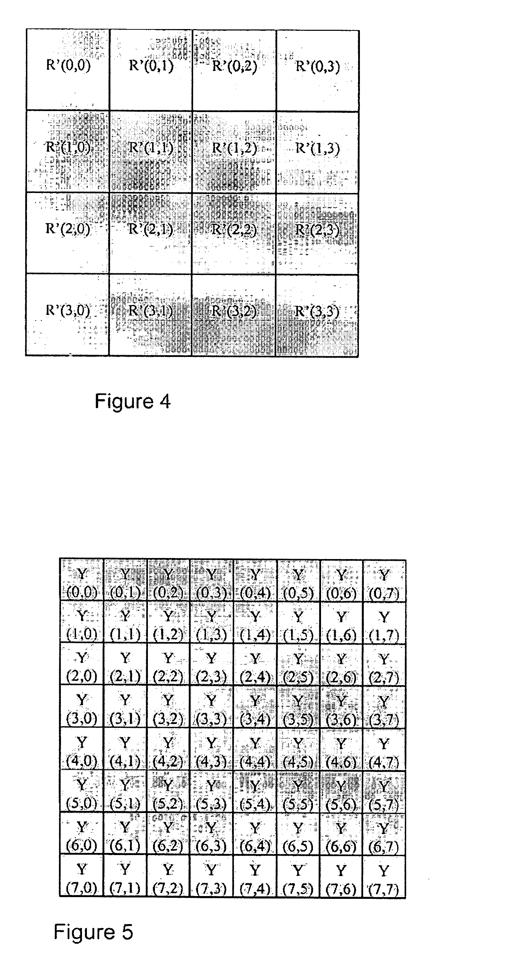

The **traditional method** works with RGB data and decimates the 3 color components (R, G, B) by after filtering (blurring) the original data. Surface mapping is a traditional filtering method when reducing the number of pixels within an RGB image. This is achieved by integrating the overlay areas of source pixels and destination pixels. This is usually done per color separately as illustrated in figs. 3 and 4, fig. 3 showing part of the original image, i.e. by way of example a 3200 x 2400 image, and fig. 4 showing part of the subsampled and filtered image, i.e. by way of example a 1600 x 1200 image.

The Red output pixels are calculated as follows (according to the overlay surfaces):

$$R'(0,0) = R(0,0)/4 + R(0,1)/4 + R(1,0)/4 + R(1,1)/4$$

$$R'(0,1) = R(0,2)/4 + R(0,3)/4 + R(1,2)/4 + R(1,3)/4$$

…

$$R'(1,0) = R(2,0)/4 + R(2,1)/4 + R(3,0)/4 + R(3,1)/4$$

$$R'(1,1) = R(2,2)/4 + R(2,3)/4 + R(3,2)/4 + R(3,3)/4$$

…

An equivalent calculation is done on the green and the blue channel.

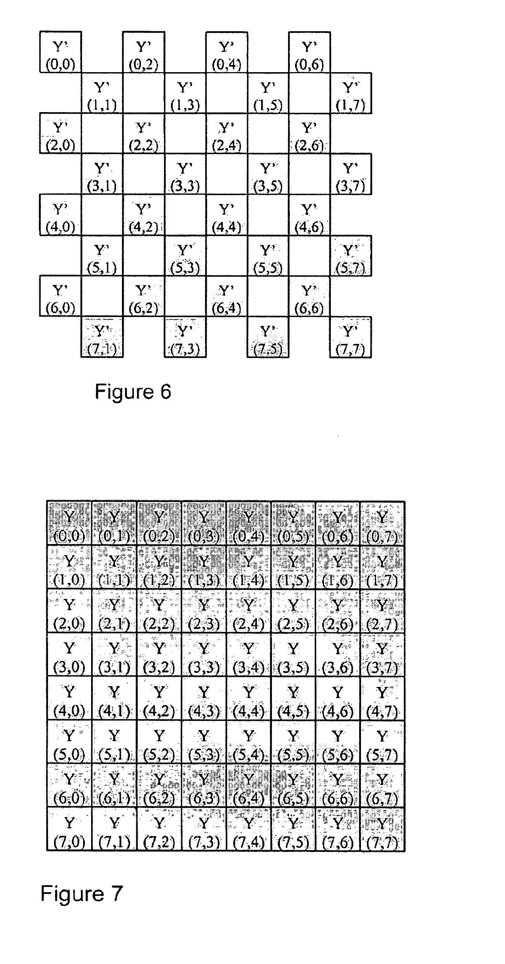

The **VQR mode** works with decimated Yuv data as illustrated in fig. 5 (before subsampling) and fig. 6 (after subsampling). The decimation alternately selects half of the pixel information with a 2 field sequence, similar to interlacing methods but uses a more complex technique. It uses a different decimation method for the luminance and chrominance channels.

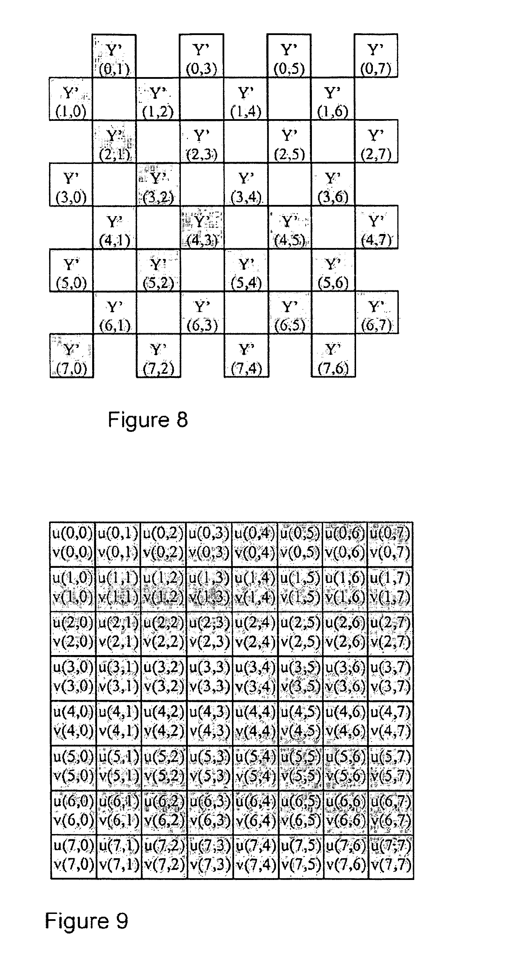

Figs. 5 to 8 show luminance data representing pixels of part of an image, by way of example a 3200 x 2400 image, before and after subsampling, by way of example in a 1600 x 1200 image, according to an embodiment of the invention. Figs. 5 and 6 show odd fields (fields 1,3,5,7,9...), while Figs. 7 and 8 show even fields (fields 0,2,4,6,8,...).

The subsampled pixels Y' can be either exact copies from the corresponding original pixels or a filtered function of the original pixels, including the rejected pixels within the current field.

Such a decimator (subsampling filter) can use linear or statistical equations or any combination of both. Whether or not such a filter is required and if so, which filter is preferably used, depends on the algorithms used by the image generator to produce the original high-resolution image. The following examples are valid equations for 1 subsampled output pixel.

1) $Y'(x,y) = Y(x,y)$
2) $Y'(x,y) = Y(x,y)/2 + Y(x-1,y)/8 + Y(x+1,y)/8 + Y(x,y-1)/8 + Y(x,y+1)/8$
3) $Y'(x,y) = MEDIAN[Y(x,y), Y(x-1,y), Y(x+1,y), Y(x,y-1), Y(x,y+1)]$

Equation 1 is a decimation function without filtering.

Equation 2 is the result obtained when applying surface mapping. Within 1 field, the decimated pixels (Y') can be considered to be twice as large as the original pixels (Y), but they are 45° rotated.

Equation 3 uses a simple statistical filter.

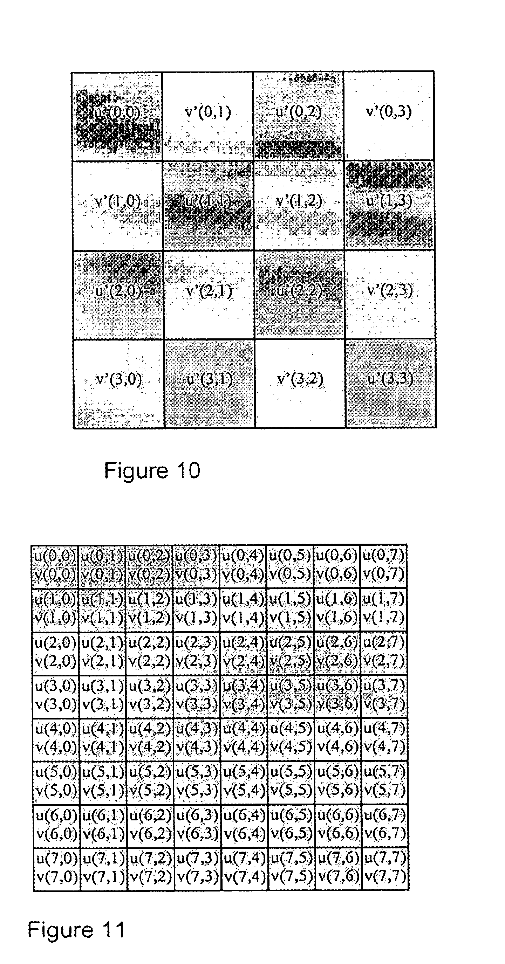

Figs. 9 and 10 show a chrominance part of part of an image, by way of example a 3200 x 2400 image, of an odd field before and after subsampling , by way of example in a 1600 x 1200 image, according to an embodiment of the invention. Subsampling of the chrominance channels, the u' and v' output pixels, could be calculated as follows for odd fields (according to the overlay surfaces), but other filter methods are possible:

$$u'(0,0) = u(0,0)/4 + u(0,1)/4 + u(1,0)/4 + u(1,1)/4$$

$$v'(0,1) = v(0,2)/4 + v(0,3)/4 + v(1,2)/4 + v(1,3)/4$$

…

$$v'(1,0) = v(2,0)/4 + v(2,1)/4 + v(3,0)/4 + v(3,1)/4$$

$$u'(1,1) = u(2,2)/4 + u(2,3)/4 + u(3,2)/4 + u(3,3)/4$$

$$\ldots$$

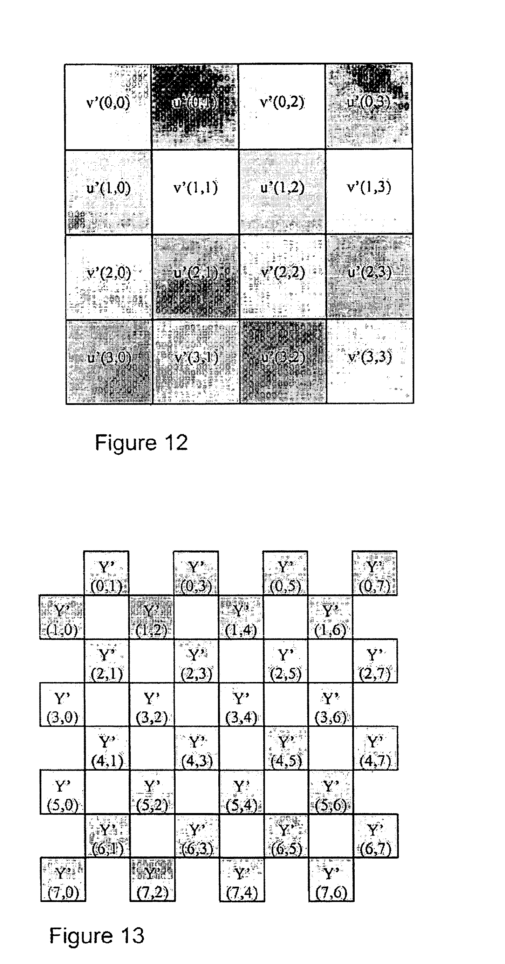

For even fields, as shown in Figs. 11 and 12, the u' and v' output pixels could be calculated as follows (according to the overlay surfaces), but other filter methods are possible:

$$v'(0,0) = v(0,0)/4 + v(0,1)/4 + v(1,0)/4 + v(1,1)/4$$

$$u'(0,1) = u(0,2)/4 + u(0,3)/4 + u(1,2)/4 + u(1,3)/4$$

$$\ldots$$

$$u'(1,0) = u(2,0)/4 + u(2,1)/4 + u(3,0)/4 + u(3,1)/4$$

$$v'(1,1) = v(2,2)/4 + v(2,3)/4 + v(3,2)/4 + v(3,3)/4$$

$$\ldots$$

The u and v components are filtered in the same way as the RGB data is filtered before subsampling inside the graphical cards (see fig. 1). Here the u and v components are alternately sampled in dimensions (columns, lines and frames) as can be seen in figs. 9 to 12.

The size of the data stream is equal to a conventional Yuv 4:4:4 encoded video data format, but there's more useful information within the data. This can be proven easily for still images and will be explained further for moving images.

The device required at the transmitter side (of the DVI link) is relatively simple, however the device to reconstruct the original image at the receiver side can be made far more complex as the image reconstruction can be made motion-adaptive.

The image reconstruction for non-moving images requires the combination of the last 2 received fields. Figs. 5 to 8 show that 2 fields of data (Y') contain all luminance information of the original high-resolution picture (3200 x 2400 pixels). Figs. 9 to 12 show that 2 fields of data (u' and v') contain all color information of the conventional output format (1600 x 1200 pixels). When compared with the traditional video output format, the embodiments described can keep all the color information but quadruple the luminance resolution for non-moving images.

On moving images, the situation is different. Suppose that there's absolutely no correlation between succeeding images. This is the opposite of still images. Then the original image reconstruction has to be done using only 1 field of video information by the receiving device. This is preferably done by a statistical filter to avoid image reconstruction artifacts and it has to be done on all video data components (Y, u and v). This fact leads to an alternative form of the invention where only all even or all odd fields are used instead of the alternating fields.

Luminance data interpolation (reconstruction).

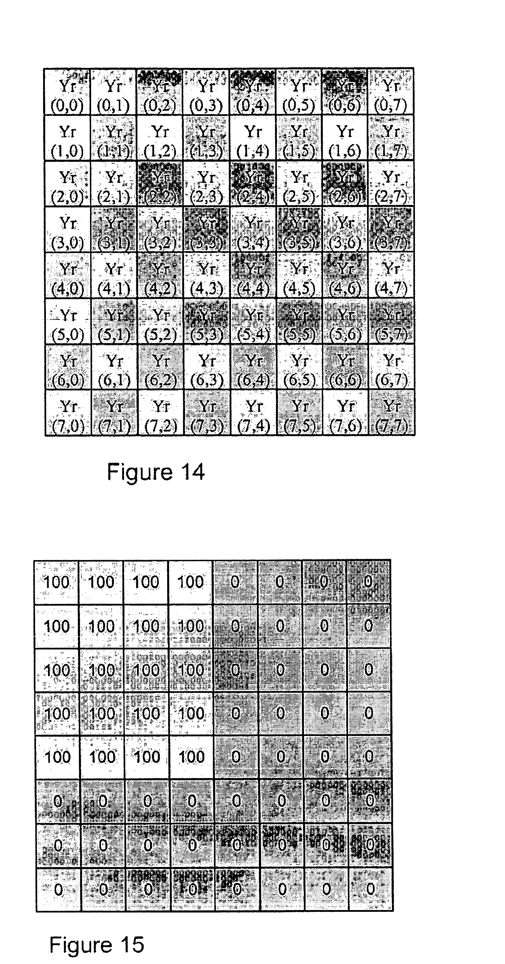

A method to reconstruct the original luminance data from 1 field of received data is illustrated in figs. 13 and 14.

In Fig. 13, the pixels Yr(0,1), Yr(0,3),...,Yr(1,0), Yr(1,2),... do not need any processing as they can be copied from the received data stream. The pixels that were not received during the last field can be reconstructed using a statistical filter as follows:

$$Yr(1,1) = \text{Median}[\, Y'(0,1), Y'(1,0), Y'(1,2), Y'(2,1), F \,]$$

Where F = Average[ Y'(0,1), Y'(1,0), Y'(1,2), Y'(2,1) ]

Each reconstructed pixel is a function of its 4 neighbors. At the edges of the image a different equation is needed. A possibility is:

$$Yr(2,0) = \text{Median}[\ Y'(1,0),\ Y'(2,1),\ Y'(3,0)\ ]$$

A possible equation to reconstruct the corner pixels is:

$$Yr(0,0) = \text{Average}[\ Y'(1,0),\ Y'(0,1)\ ]$$

Edge reconstruction of luminance channel on moving images:

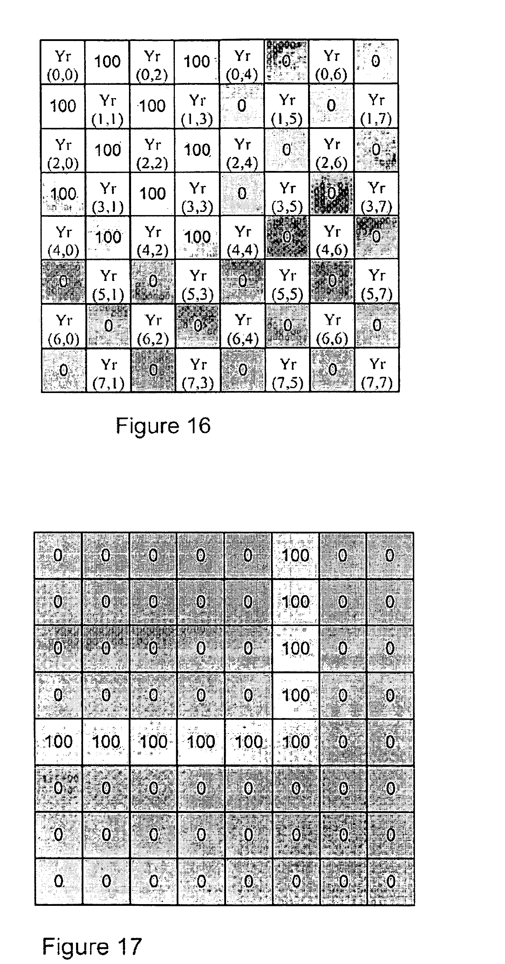

The interpolator (reconstruction filter) described above can provide improved or perfect horizontal and vertical edge reconstruction as illustrated in figs. 15 and 16, showing part of the original luminance data Y, for the example of a 3200 x 2400 image, and part of the received data and the data to be constructed Yr respectively. For moving images, the interpolator uses pixels on both sides in x and y directions without using any neighboring pixels in the time direction, in other words without using inter frame interpolation. In Fig. 15, solving the equations mentioned above for the pixels to be reconstructed gives:

$$Yr(0,0) = \text{Average}[\ 100,100] = 100$$

$$Yr(0,2) = \text{Median}[100,100,100] = 100$$

$$Yr(0,4) = \text{Median}[100,0,0] = 0$$

$$Yr(0,6) = \text{Median}[0,0,0] = 0$$

$$Yr(1,1) = \text{Median}[100,100,100,100,\text{Average}(100,100,100,100)] = 100$$

$$Yr(1,3) = \text{Median}[100,100,100,0,\text{Average}(100,100,100,0)] = 100$$

$$\ldots$$

$$Yr(2,4) = \text{Median}[100,0,0,0,\text{Average}(100,0,0,0)] = 0$$

$$\ldots$$

$$Yr(4,0) = \text{Median}[100,100,0] = 100$$

$$Yr(4,2) = \text{Median}[100,100,100,0,\text{Average}(100,100,100,0)] = 100$$

$$Yr(4,4) = Median[100,0,0,0,Average(100,0,0,0)] = 0$$

...

$$Yr(5,1) = Median[100,0,0,0,Average(100,0,0,0)] = 0$$

$$Yr(5,3) = Median[100,0,0,0,Average(100,0,0,0)] = 0$$

...

In this way the reconstructed luminance data (Yr) is a perfect duplicate of the original data (Y).

Line reconstruction of luminance channel on moving images:

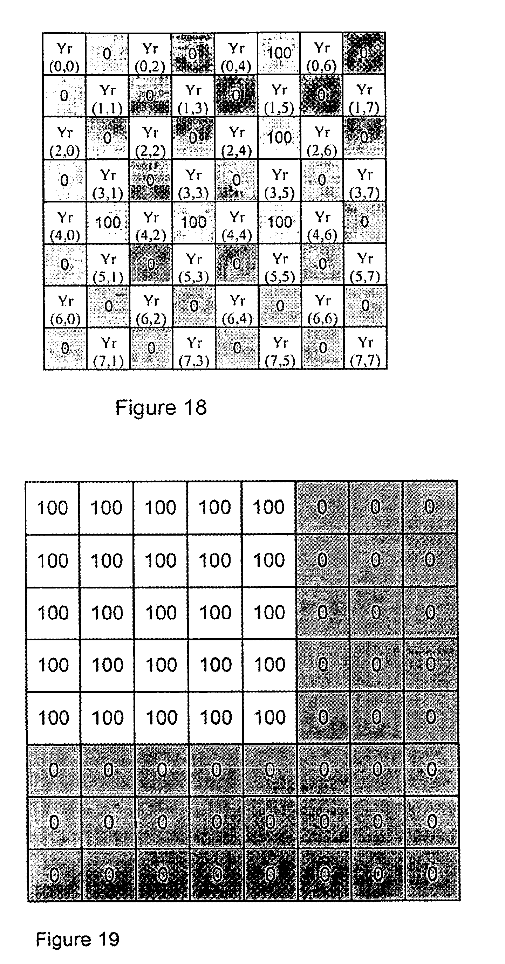

The reconstruction filter approximates the original image containing the smallest possible horizontal and vertical lines as illustrated in figs. 17 and 18. As shown in Fig. 18, solving the equations mentioned above for the pixels to be reconstructed gives:

$$Yr(0,4) = Median[0,0,100] = 0$$

$$Yr(0,6) = Median[100,0,0] = 0$$

...

$$Yr(1,5) = Median[0,100,0,100,Average(0,100,0,100)] = 50$$

...

$$Yr(3,5) = Median[0,100,0,100,Average(0,100,0,100)] = 50$$

...

$$Yr(4,0) = Median[0,100,0] = 0$$

$$Yr(4,2) = Median[0,100,100,0,Average(0,100,100,0)] = 50$$

$$Yr(4,4) = Median[0,100,100,0,Average(0,100,100,0)] = 50$$

...

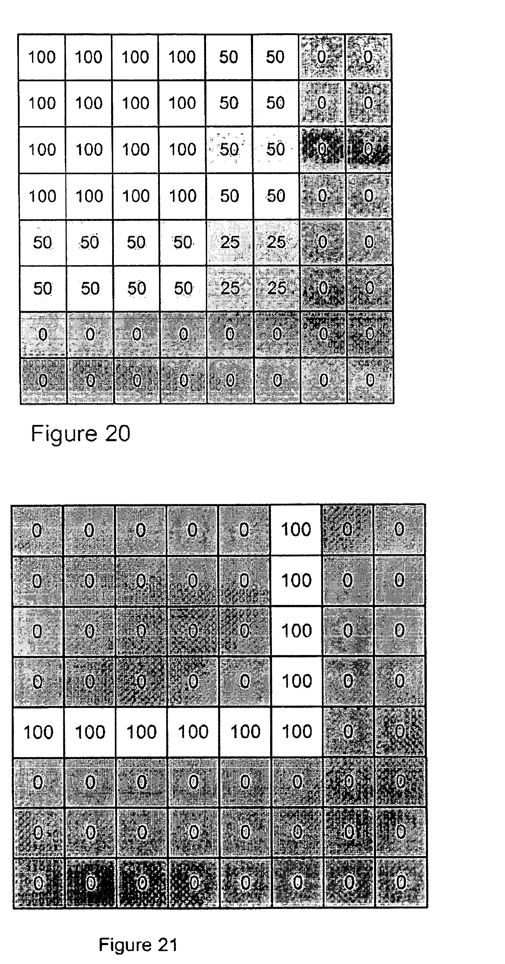

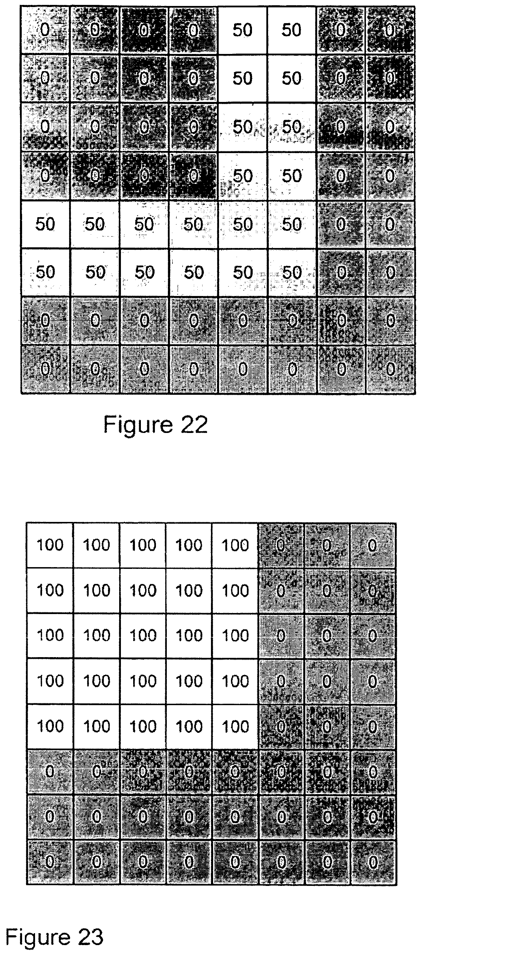

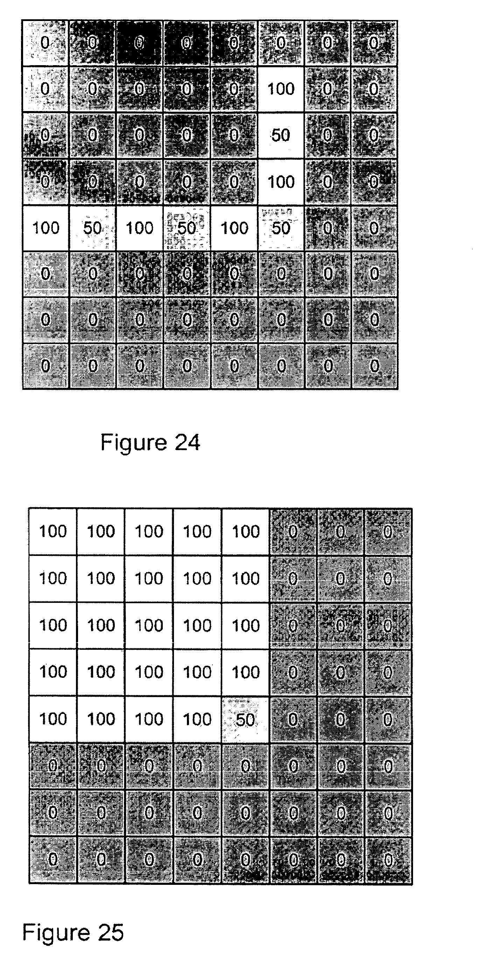

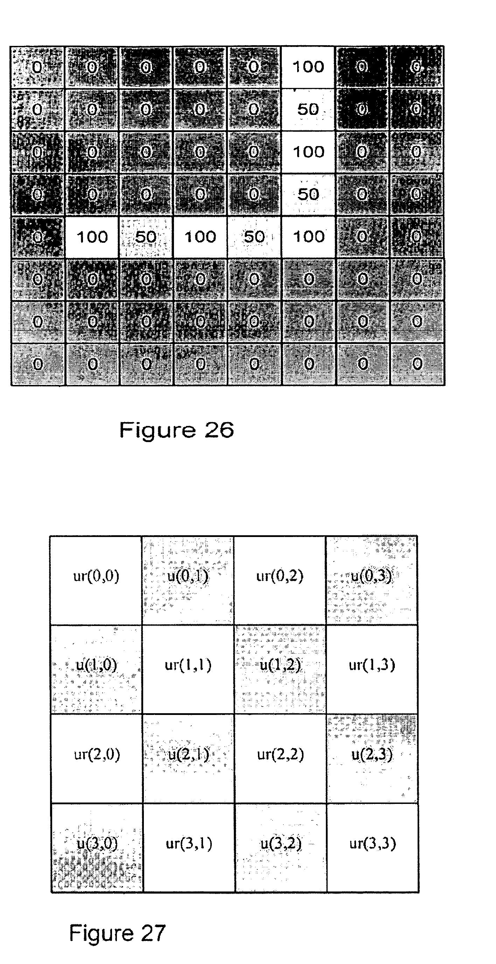

The difference between the picture quality produced with the traditional method and with the current invention is illustrated in figs. 19 to 26. These figures show the difference on edges and small lines, which are often the most difficult features to compress. All the reconstructed values within the images in these figures that are different from 0 and 100 are reconstruction errors. Figs. 19 and 21 show the original images having an edge and a line respectively, both extending horizontally and vertically. Figs. 20 and 22 show the effect of a conventional subsampling and interpolation filter. Figs. 23 to 26 show the results after subsampling and interpolation according to an embodiment of the invention, using the equations set out above. Figs. 23 and 24 show the edge and line images respectively for an even field. Figs. 25 and 26 show the edge and line images respectively for an odd field. In this way the reconstructed luminance data (Yr) is not a perfect duplicate of the original data (Y). It is however a good approximation and certainly puts the details more exactly on the right place than the traditional method using only 1600 x 1200 pixels instead of 3200 x 2400 pixels.

On still images the luminance resolution is effectively quadrupled compared with the traditional method. On moving images horizontal and vertical edges of objects higher and wider than 1 pixel edges are exactly reconstructed, thus the positioning accuracy of such objects is also effectively quadrupled. Small moving objects can suffer from artifacts (see figs. 24 and 26) but the reconstructed data is still a lot more accurate than the traditional results. This is because the image resolution per field is not quadrupled but doubled. However the reconstruction filter will virtually quadruple the resolution in many cases.

It is possible to use more elaborated statistical filtering techniques to even further reduce these types of artifacts. The filter described above is just one example of what the performance of embodiments of the current invention can be, just as the mentioned resolutions and the chosen images are examples as well.

Color data reconstruction:

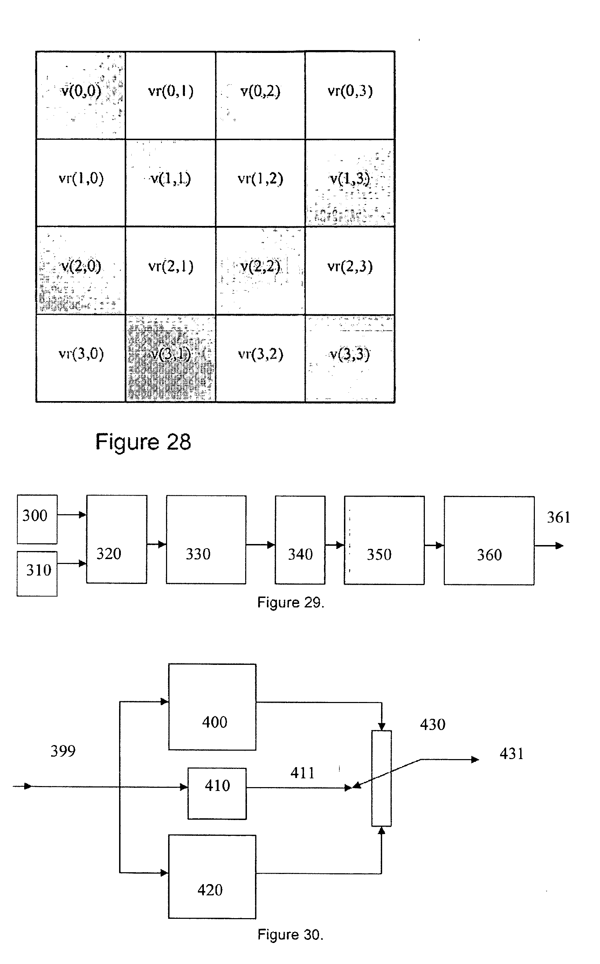

The color information can be reconstructed using the same method and device as described above for reconstructing the luminance data. The only difference described below is the resolution which is transmitted and reconstructed. In case the original image has 3200 x 2400 pixels, then the luminance data to reconstruct is 3200 x 2400 as well, but the chrominance components both are limited to 1600 x 1200 pixels. The reconstruction of the u and v components is illustrated in figs. 27 and 28.

The white pixels in these figures are the pixels to be reconstructed by the statistical filter, the shaded pixels are those received within the current field. The subsampled pixels received for the component u are complementary to the pixels received for v.

Both color component patterns (u and v) are inverted each field, just as is done for the luminance channel. That means all conclusions derived from the examples to reconstruct the luminance channel are also true for the color components (u and v), but the resolution scale is different. It is also possible to not alternate the color component patterns and/or define them as in or out of phase relative to each other.

On still images, the color reproduction is as good as with conventional video data transmission techniques while the luminance resolution is quadrupled.

On moving images, color reproduction is still perfect on horizontal edges of objects taller and wider than 1 pixel.

On moving objects with about the height or width of 1 pixel, small color artifacts might become noticeable (see figs. 24 and 26), but this quality loss is highly compensated by the extra resolution obtained on the luminance channel. The overall result is a higher perceived image quality.

Motion adaptive image data reconstruction:

As already suggested, the best reconstruction method depends on the amount of motion. Therefore, a motion detector can be implemented inside the image reconstruction device. Many algorithms are known for a motion detector. Usually this means there are one or more image frame buffers to be able to compare the currently received image data 300, e.g. a new frame, with previous fields 310, e.g. an old frame. A filter can be used to integrate (non-linearly) the amount of motion based of the difference of certain pixels with the same pixels in one or more previous fields. A possible implementation (amongst many others) of such a motion detector is illustrated in fig. 29.

Below is a brief discussion that explains the functions inside this motion detector:

- The subtractor 320 outputs the difference between the current frame and the previous frame. It e.g. allows to detect differences per pixel.
- To achieve a useful motion measurement within a certain area, a bidirectional finite impulse response filter 330 is used, which e.g. allows to integrate an image area. The optimal size of that filter can depend on the input resolution.
- The absolute value has to be taken (340) to indicate the amount of motion in a certain area.
- The second FIR filter 350 is implemented to achieve a smooth transition between areas that will be reconstructed by field insertion (non-moving areas) and areas that will be reconstructed by intra-field processing based on a statistical filter. This helps to avoid dynamic artifacts at the edges of moving areas. The second FIR filter 350 thus allows to smoothen the actions taken by the motion detector.
- The look up table 360 defines the relation between the linear motion detector value and the processing algorithm used. When the input value is rather small, then the preferred reconstruction method is field insertion, which means that no pixels have to be calculated. When the input value is high, the statistical intra-field filter is preferred as this indicates that there's insufficient correlation between succeeding fields. In other words, the look up table 360 defines the motion threshold and the sensitivity to motion.

- An output 361 is generated.

The motion detector's quality does not directly influence the reconstructed picture quality, though it indirectly has an impact on the overall picture quality as the purpose of the motion detector is to choose the best reconstruction method all the time. This process is illustrated in fig. 30.

The circuit in fig. 30 describes one structure of the Yuv upsampler if motion dependent interpolation is used. It can comprise the following 4 components described here. It has transmitted and received video data as input 399 and reconstructed video data as output 431.

The **inter-field pixel insertion part** 420 can involve selecting the appropriate pixels and does not need any calculations, if the decimation pattern is alternated each field, and if there is no motion. In this way an inter-field pixel insertion combination method may be obtained. Another option is to interpolate between pixels at the same position in fields before and after the current field, to take account of some motion.

The **intra-field pixel reconstruction** part 400 is another example of an interpolator and can consist of a combination of statistical and linear filters. In this way an intra-field statistical reconstruction filter method may be obtained. The example explained in this document indicates some of the possibilities by using such a reconstruction method. Obviously more elaborate filter methods are possible.

The **motion detector** 410 can consist of (at least some of) the components described in fig. 29, however many other possibilities exist. It may provide the amount of motion 411 that is present. Whereas the image reconstruction filters have to be implemented of Y, u and v separately, the motion detector device can use only the luminance signal or it can contain a weighted combination of luminance motion and color motion.

The **mixing interpolator** 430 mixes the reconstructed video data obtained by the inter-field pixel insertion component and the intra-field pixel reconstruction component based on whether there is less motion or more motion. The motion detector controls the mixing balance of the two methods. The mixing interpolator enables a smooth transition between the two algorithms, which would not be possible if a simple switch were to be used instead of a mixing interpolator. A similar arrangement can in principle be used at the transmitting side to make the decimation motion dependent, for example extending the decimation factor when there is no motion, so that one pixel in each 2x2 block of pixels remains and it takes four fields to transmit all pixels.

The compression and decompression circuitry and methods described can be used in a variety of applications, including video conferencing, video storage, video transmission to a display device, over connections such as DVI links, local area networks or long distance links such as optical fiber networks. The methods can be implemented in software using a conventional programming language, for running on conventional processing hardware, or can be implemented to any degree in more dedicated hardware, such as DSP, or ASIC type hardware for example. Such software can encompass databases or rules as well as instructions for example, for causing or controlling the methods to be carried out by appropriate hardware, or for configuring configurable hardware to enable such methods to be carried out. Such software can be stored on computer readable media or be present in transient form as signals or in temporary volatile memory for example.

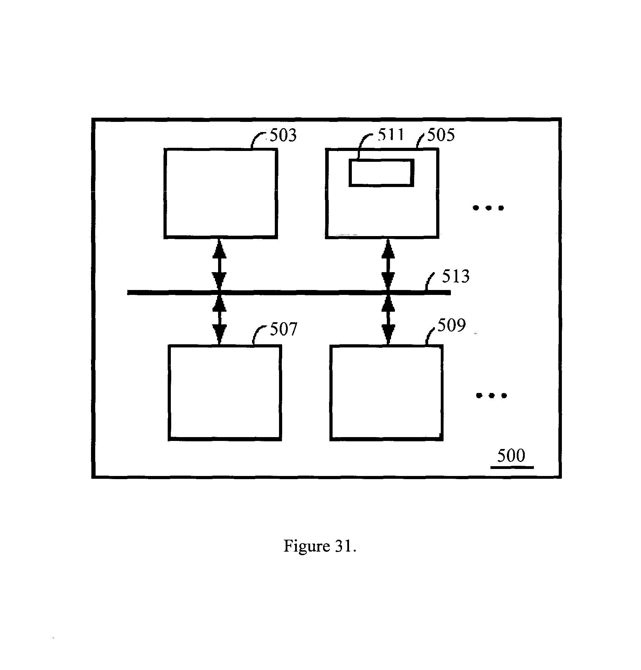

In a further embodiment, the invention relates to a processing system 500 wherein the method embodiments according to the present invention are implemented, or in other words, to a processing system adapted for performing any of the compression or decompression methods according to the present invention. An exemplary processing system 500 is shown in Fig. 31. Fig. 31 shows one configuration of processing system 500 that includes at least one programmable processor 503 coupled to a memory subsystem 505 that includes at least one form of memory, e.g., RAM, ROM, and so forth. A storage subsystem 507 may be included that has at least one disk drive and/or CD-ROM drive and/or DVD drive. In some implementations, a display system, a keyboard, and a pointing device may be included as part of a user interface subsystem 509 to provide for a user to manually input information. Ports for inputting and outputting data also may be included. More elements such as network connections, interfaces to various devices, and so forth, may be included, but are not illustrated in Fig. 31. The various elements of the processing system 500 may be coupled in various ways, including via a bus subsystem 513 shown in Fig. 31 for simplicity as a single bus, but will be understood to those in the art to include a system of at least one bus. The memory of the memory subsystem 505 may at some time hold part or all (in either case shown as 511) of a set of instructions that when executed on the processing system 500 implement the step(s) of the method embodiments for sub-structuring described herein. Thus, while a processing system 500 such as shown in Fig. 31 is prior art, a system that includes the instructions to implement aspects of the present invention is not prior art, and therefore Fig. 31 is not labeled as prior art.

It is to be noted that the processor 503 or processors may be a general purpose, or a special purpose processor, and may be for inclusion in a device, e.g., a chip that has other components that perform other functions. Thus, one or more aspects of the present invention can be implemented in digital electronic circuitry, or in computer hardware, firmware, software, or in combinations of them. Furthermore, aspects of the invention can be implemented in a computer program product tangibly embodied in a carrier medium carrying machine-readable code for execution by a programmable processor. Method steps of aspects of the invention may be performed by a programmable processor executing instructions to perform functions of those aspects of the invention, e.g., by operating on input data and generating output data.

As has been described, compression and decompression of video image data involves removing data (230) representing pixels from a field to leave data representing pixels adjacent and on both sides of the removed pixels in at least two directions. Different pixels are removed from different fields so that over a given number of consecutive fields, there is remaining data representing all the pixels. For decompression, interpolation (250) uses a statistical combination of the remaining data representing the remaining pixels on both sides in the two directions, and uses remaining data for a corresponding pixel from a different field. Such decimation can retain more information, and statistical interpolation can enable data reconstruction with fewer artifacts and less blurring of edges and lines, without heavy processing requirements. The interpolation can be motion sensitive. The chrominance can be decimated to a lower resolution and/or coarser quantization level.

## Claims

1. An arrangement for compression and/or decompression of video image data, having:

    - a decimator (230) for carrying out compression by removing data representing pixels or clusters of pixels from a field of the video image data such that, away from a periphery of the field, there remain data representing pixels adjacent and on both sides of the removed pixels or removed clusters of pixels in at least two substantially orthogonal directions in an x,y co-ordinate frame, and such that different pixels are removed from different fields so that over a given number of consecutive fields, there is remaining data representing all the pixels, and
    - an interpolator (250) for carrying out at least partial decompression and arranged to interpolate using a statistical combination of the remaining data representing the remaining pixels on both sides in the two directions, and using remaining data for a corresponding pixel from a different field.

2. An arrangement according to claim 1, wherein said interpolator (250) is arranged to interpolate using a statistical combination of the remaining data representing the remaining pixels on both sides in the two directions, and using remaining data for a corresponding pixel from a different field, according to image motion.

3. An arrangement according to any of the previous claims, wherein the video image data has separate color video image data in different colors without luminance-only video image data, the apparatus having a luminance/chrominance converter for converting the color video image data into luminance video image data and chrominance video image data for feeding to the decimator, and the decimator being arranged to decimate the luminance video image data and the chrominance video image data separately.

4. An arrangement according to any of the previous claims, further comprising the remaining data representing pixels adjacent and on both sides of the removed pixels or removed clusters of pixels in three substantially orthogonal directions in an x,y,t co-ordinate frame.

5. An arrangement according to any of the previous claims, wherein the interpolator (250) has means to use a statistical combination of at least a median of the data representing the neighboring pixels on both sides in two directions.

6. An arrangement according to any of the previous claims, wherein the means to use a statistical combination additionally has means to use an average of these neighboring pixels.

7. An arrangement according to any of the previous claims, wherein the decimator (230) has means to perform the decimation dependent on motion in the image.

8. An arrangement according to any of the previous claims, wherein the decimator (230) has means to perform the compression without luminance channel interlacing or without chrominance channel interlacing.

9. An arrangement according to any of the previous claims, there being two chrominance channels, arranged in phase.

10. An arrangement according to any of the previous claims, wherein in the decimator (230) and the interpolator (250) the decimation and interpolation is arranged symmetrically in two directions in one plane.

**11.** An arrangement according to any of the previous claims, wherein in the decimator (230) and the interpolator (250) the decimation and the interpolation is extended to a factor greater than 2.

**12.** An arrangement according to any of the previous claims, having circuitry (240) for converting the decimated video image data into a signal for transmission along a DVI link.

**13.** A method of decompressing compressed video image data which has had removed data representing pixels or clusters of pixels from a field of the video image data such that, away from a periphery of the field, there remain data representing pixels adjacent and on both sides of the removed pixels or removed clusters of pixels in at least two substantially orthogonal directions in an x,y co-ordinate frame, and such that different pixels are removed from different fields so that over a given number of consecutive fields, there is remaining data representing all the pixels, the method having a step of interpolating a removed pixel using a statistical combination of input data representing remaining pixels on both sides of the removed pixel in two directions, and using input data for a corresponding pixel from a different field.

**14.** A method of producing decompressed video image data signals using the method of claim 13.

**15.** A computer program product for executing any of the methods of claims 13 to 14 when executed on a computing device.

**16.** A machine readable data storage device storing the computer program product of claim 15.

**17.** A processing system adapted for performing the decompression method according to claim 13.

**18.** Transmission of the computer program product of claim 15 over a local or wide area telecommunications network.

**19.** An apparatus for compression of video image data, having:

- a decimator (230) for carrying out compression by removing data representing pixels or clusters of pixels from a field of the video image data such that, away from a periphery of the field, there remain data representing pixels adjacent and on both sides of the removed pixels or removed clusters of pixels in at least two substantially orthogonal directions in an x,y co-ordinate frame, and such that different pixels are removed from different fields so that over a given number of consecutive fields, there is remaining data representing all the pixels.

**20.** An apparatus for decompression of compressed video image data, comprising means for receiving compressed data, the compression having been performed by removing data representing pixels or clusters of pixels from a field of the video image data such that, away from a periphery of the field, there remain data representing pixels adjacent and on both sides of the removed pixels or removed clusters of pixels in at least two substantially orthogonal directions in an x,y co-ordinate frame, and such that different pixels are removed from different fields so that over a given number of consecutive fields, there is remaining data representing all the pixels, and an interpolator (250) for carrying out at least partial decompression and arranged to interpolate using a statistical combination of the remaining data representing the remaining pixels on both sides in the two directions, and using remaining data for a corresponding pixel from a different field.

**21.** An apparatus according to claim 20, wherein said interpolator (250) is arranged to interpolate using a statistical combination of the remaining data representing the remaining pixels on both sides in the two directions, and using remaining data for a corresponding pixel from a different field, according to image motion.

4

8

```
┌─────────────────────────────────────┐   ┌──────────────┐
│ ┌──────┐   ┌──────┐  ┌──────┐ ┌────┐ │   │ ┌────┐ ┌────┐ │
│ │      │   │      │  │      │ │    │ │ 6 │ │    │ │    │ │
│ │  10  │→  │  20  │→ │  30  │→│ 40 │ │→  │ │ 50 │→│ 60 │ │
│ │      │   │      │  │      │ │    │ │   │ │    │ │    │ │
│ └──────┘   └──────┘  └──────┘ └────┘ │   │ └────┘ └────┘ │
└─────────────────────────────────────┘   └──────────────┘
```

Figure 1.

204

208

```
┌──────────────────────────────────────┐    ┌──────────────────────────────┐
│ ┌──────┐   ┌──────┐        ┌─ ─ ─ ─┐  │    │ ┌────┐  ┌────┐ ┌────┐ ┌────┐  │
│ │      │   │      │        │       │  │  6 │ │    │  │    │ │    │ │    │  │
│ │  10  │→  │ 220  │→  230  →│ 240   │  │→   │ │250 │→ │260 │→│270 │→│ 60 │  │
│ │      │   │      │        │       │  │    │ │    │  │    │ │    │ │    │  │
│ └──────┘   └──────┘        └───────┘  │    │ └────┘  └────┘ └────┘ └────┘  │
└──────────────────────────────────────┘    └──────────────────────────────┘
```

Figure 2.

| R(0,0) | R(0,1) | R(0,2) | R(0,3) | R(0,4) | R(0,5) | R(0,6) | R(0,7) |
|--------|--------|--------|--------|--------|--------|--------|--------|
| R(1,0) | R(1,1) | R(1,2) | R(1,3) | R(1,4) | R(1,5) | R(1,6) | R(1,7) |
| R(2,0) | R(2,1) | R(2,2) | R(2,3) | R(2,4) | R(2,5) | R(2,6) | R(2,7) |
| R(3,0) | R(3,1) | R(3,2) | R(3,3) | R(3,4) | R(3,5) | R(3,6) | R(3,7) |
| R(4,0) | R(4,1) | R(4,2) | R(4,3) | R(4,4) | R(4,5) | R(4,6) | R(4,7) |
| R(5,0) | R(5,1) | R(5,2) | R(5,3) | R(5,4) | R(5,5) | R(5,6) | R(5,7) |
| R(6,0) | R(6,1) | R(6,2) | R(6,3) | R(6,4) | R(6,5) | R(6,6) | R(6,7) |
| R(7,0) | R(7,1) | R(7,2) | R(7,3) | R(7,4) | R(7,5) | R(7,6) | R(7,7) |

Figure 3

| | | | |
|---|---|---|---|
| R'(0,0) | R'(0,1) | R'(0,2) | R'(0,3) |
| R'(1,0) | R'(1,1) | R'(1,2) | R'(1,3) |
| R'(2,0) | R'(2,1) | R'(2,2) | R'(2,3) |
| R'(3,0) | R'(3,1) | R'(3,2) | R'(3,3) |

Figure 4

| | | | | | | | |
|---|---|---|---|---|---|---|---|
| Y (0,0) | Y (0,1) | Y (0,2) | Y (0,3) | Y (0,4) | Y (0,5) | Y (0,6) | Y (0,7) |
| Y (1,0) | Y (1,1) | Y (1,2) | Y (1,3) | Y (1,4) | Y (1,5) | Y (1,6) | Y (1,7) |
| Y (2,0) | Y (2,1) | Y (2,2) | Y (2,3) | Y (2,4) | Y (2,5) | Y (2,6) | Y (2,7) |
| Y (3,0) | Y (3,1) | Y (3,2) | Y (3,3) | Y (3,4) | Y (3,5) | Y (3,6) | Y (3,7) |
| Y (4,0) | Y (4,1) | Y (4,2) | Y (4,3) | Y (4,4) | Y (4,5) | Y (4,6) | Y (4,7) |
| Y (5,0) | Y (5,1) | Y (5,2) | Y (5,3) | Y (5,4) | Y (5,5) | Y (5,6) | Y (5,7) |
| Y (6,0) | Y (6,1) | Y (6,2) | Y (6,3) | Y (6,4) | Y (6,5) | Y (6,6) | Y (6,7) |
| Y (7,0) | Y (7,1) | Y (7,2) | Y (7,3) | Y (7,4) | Y (7,5) | Y (7,6) | Y (7,7) |

Figure 5

| Y' (0,0) |          | Y' (0,2) |          | Y' (0,4) |          | Y' (0,6) |          |
|          | Y' (1,1) |          | Y' (1,3) |          | Y' (1,5) |          | Y' (1,7) |
| Y' (2,0) |          | Y' (2,2) |          | Y' (2,4) |          | Y' (2,6) |          |
|          | Y' (3,1) |          | Y' (3,3) |          | Y' (3,5) |          | Y' (3,7) |
| Y' (4,0) |          | Y' (4,2) |          | Y' (4,4) |          | Y' (4,6) |          |
|          | Y' (5,1) |          | Y' (5,3) |          | Y' (5,5) |          | Y' (5,7) |
| Y' (6,0) |          | Y' (6,2) |          | Y' (6,4) |          | Y' (6,6) |          |
|          | Y' (7,1) |          | Y' (7,3) |          | Y' (7,5) |          | Y' (7,7) |

## Figure 6

| Y (0,0) | Y (0,1) | Y (0,2) | Y (0,3) | Y (0,4) | Y (0,5) | Y (0,6) | Y (0,7) |
|---------|---------|---------|---------|---------|---------|---------|---------|
| Y (1,0) | Y (1,1) | Y (1,2) | Y (1,3) | Y (1,4) | Y (1,5) | Y (1,6) | Y (1,7) |
| Y (2,0) | Y (2,1) | Y (2,2) | Y (2,3) | Y (2,4) | Y (2,5) | Y (2,6) | Y (2,7) |
| Y (3,0) | Y (3,1) | Y (3,2) | Y (3,3) | Y (3,4) | Y (3,5) | Y (3,6) | Y (3,7) |
| Y (4,0) | Y (4,1) | Y (4,2) | Y (4,3) | Y (4,4) | Y (4,5) | Y (4,6) | Y (4,7) |
| Y (5,0) | Y (5,1) | Y (5,2) | Y (5,3) | Y (5,4) | Y (5,5) | Y (5,6) | Y (5,7) |
| Y (6,0) | Y (6,1) | Y (6,2) | Y (6,3) | Y (6,4) | Y (6,5) | Y (6,6) | Y (6,7) |
| Y (7,0) | Y (7,1) | Y (7,2) | Y (7,3) | Y (7,4) | Y (7,5) | Y (7,6) | Y (7,7) |

## Figure 7

|  | Y'<br>(0,1) |  | Y'<br>(0,3) |  | Y'<br>(0,5) |  | Y'<br>(0,7) |
| Y'<br>(1,0) |  | Y'<br>(1,2) |  | Y'<br>(1,4) |  | Y'<br>(1,6) |  |
|  | Y'<br>(2,1) |  | Y'<br>(2,3) |  | Y'<br>(2,5) |  | Y'<br>(2,7) |
| Y'<br>(3,0) |  | Y'<br>(3,2) |  | Y'<br>(3,4) |  | Y'<br>(3,6) |  |
|  | Y'<br>(4,1) |  | Y'<br>(4,3) |  | Y'<br>(4,5) |  | Y'<br>(4,7) |
| Y'<br>(5,0) |  | Y'<br>(5,2) |  | Y'<br>(5,4) |  | Y'<br>(5,6) |  |
|  | Y'<br>(6,1) |  | Y'<br>(6,3) |  | Y'<br>(6,5) |  | Y'<br>(6,7) |
| Y'<br>(7,0) |  | Y'<br>(7,2) |  | Y'<br>(7,4) |  | Y'<br>(7,6) |  |

Figure 8

| u(0,0)<br>v(0,0) | u(0,1)<br>v(0,1) | u(0,2)<br>v(0,2) | u(0,3)<br>v(0,3) | u(0,4)<br>v(0,4) | u(0,5)<br>v(0,5) | u(0,6)<br>v(0,6) | u(0,7)<br>v(0,7) |
| u(1,0)<br>v(1,0) | u(1,1)<br>v(1,1) | u(1,2)<br>v(1,2) | u(1,3)<br>v(1,3) | u(1,4)<br>v(1,4) | u(1,5)<br>v(1,5) | u(1,6)<br>v(1,6) | u(1,7)<br>v(1,7) |
| u(2,0)<br>v(2,0) | u(2,1)<br>v(2,1) | u(2,2)<br>v(2,2) | u(2,3)<br>v(2,3) | u(2,4)<br>v(2,4) | u(2,5)<br>v(2,5) | u(2,6)<br>v(2,6) | u(2,7)<br>v(2,7) |
| u(3,0)<br>v(3,0) | u(3,1)<br>v(3,1) | u(3,2)<br>v(3,2) | u(3,3)<br>v(3,3) | u(3,4)<br>v(3,4) | u(3,5)<br>v(3,5) | u(3,6)<br>v(3,6) | u(3,7)<br>v(3,7) |
| u(4,0)<br>v(4,0) | u(4,1)<br>v(4,1) | u(4,2)<br>v(4,2) | u(4,3)<br>v(4,3) | u(4,4)<br>v(4,4) | u(4,5)<br>v(4,5) | u(4,6)<br>v(4,6) | u(4,7)<br>v(4,7) |
| u(5,0)<br>v(5,0) | u(5,1)<br>v(5,1) | u(5,2)<br>v(5,2) | u(5,3)<br>v(5,3) | u(5,4)<br>v(5,4) | u(5,5)<br>v(5,5) | u(5,6)<br>v(5,6) | u(5,7)<br>v(5,7) |
| u(6,0)<br>v(6,0) | u(6,1)<br>v(6,1) | u(6,2)<br>v(6,2) | u(6,3)<br>v(6,3) | u(6,4)<br>v(6,4) | u(6,5)<br>v(6,5) | u(6,6)<br>v(6,6) | u(6,7)<br>v(6,7) |
| u(7,0)<br>v(7,0) | u(7,1)<br>v(7,1) | u(7,2)<br>v(7,2) | u(7,3)<br>v(7,3) | u(7,4)<br>v(7,4) | u(7,5)<br>v(7,5) | u(7,6)<br>v(7,6) | u(7,7)<br>v(7,7) |

Figure 9

| | | | |
|---|---|---|---|
| u'(0,0) | v'(0,1) | u'(0,2) | v'(0,3) |
| v'(1,0) | u'(1,1) | v'(1,2) | u'(1,3) |
| u'(2,0) | v'(2,1) | u'(2,2) | v'(2,3) |
| v'(3,0) | u'(3,1) | v'(3,2) | u'(3,3) |

Figure 10

| u(0,0) v(0,0) | u(0,1) v(0,1) | u(0,2) v(0,2) | u(0,3) v(0,3) | u(0,4) v(0,4) | u(0,5) v(0,5) | u(0,6) v(0,6) | u(0,7) v(0,7) |
|---|---|---|---|---|---|---|---|
| u(1,0) v(1,0) | u(1,1) v(1,1) | u(1,2) v(1,2) | u(1,3) v(1,3) | u(1,4) v(1,4) | u(1,5) v(1,5) | u(1,6) v(1,6) | u(1,7) v(1,7) |
| u(2,0) v(2,0) | u(2,1) v(2,1) | u(2,2) v(2,2) | u(2,3) v(2,3) | u(2,4) v(2,4) | u(2,5) v(2,5) | u(2,6) v(2,6) | u(2,7) v(2,7) |
| u(3,0) v(3,0) | u(3,1) v(3,1) | u(3,2) v(3,2) | u(3,3) v(3,3) | u(3,4) v(3,4) | u(3,5) v(3,5) | u(3,6) v(3,6) | u(3,7) v(3,7) |
| u(4,0) v(4,0) | u(4,1) v(4,1) | u(4,2) v(4,2) | u(4,3) v(4,3) | u(4,4) v(4,4) | u(4,5) v(4,5) | u(4,6) v(4,6) | u(4,7) v(4,7) |
| u(5,0) v(5,0) | u(5,1) v(5,1) | u(5,2) v(5,2) | u(5,3) v(5,3) | u(5,4) v(5,4) | u(5,5) v(5,5) | u(5,6) v(5,6) | u(5,7) v(5,7) |
| u(6,0) v(6,0) | u(6,1) v(6,1) | u(6,2) v(6,2) | u(6,3) v(6,3) | u(6,4) v(6,4) | u(6,5) v(6,5) | u(6,6) v(6,6) | u(6,7) v(6,7) |
| u(7,0) v(7,0) | u(7,1) v(7,1) | u(7,2) v(7,2) | u(7,3) v(7,3) | u(7,4) v(7,4) | u(7,5) v(7,5) | u(7,6) v(7,6) | u(7,7) v(7,7) |

Figure 11

| | | | |
|---|---|---|---|
| v'(0,0) | u'(0,1) | v'(0,2) | u'(0,3) |
| u'(1,0) | v'(1,1) | u'(1,2) | v'(1,3) |
| v'(2,0) | u'(2,1) | v'(2,2) | u'(2,3) |
| u'(3,0) | v'(3,1) | u'(3,2) | v'(3,3) |

Figure 12

| | Y'(0,1) | | Y'(0,3) | | Y'(0,5) | | Y'(0,7) |
|---|---|---|---|---|---|---|---|
| Y'(1,0) | | Y'(1,2) | | Y'(1,4) | | Y'(1,6) | |
| | Y'(2,1) | | Y'(2,3) | | Y'(2,5) | | Y'(2,7) |
| Y'(3,0) | | Y'(3,2) | | Y'(3,4) | | Y'(3,6) | |
| | Y'(4,1) | | Y'(4,3) | | Y'(4,5) | | Y'(4,7) |
| Y'(5,0) | | Y'(5,2) | | Y'(5,4) | | Y'(5,6) | |
| | Y'(6,1) | | Y'(6,3) | | Y'(6,5) | | Y'(6,7) |
| Y'(7,0) | | Y'(7,2) | | Y'(7,4) | | Y'(7,6) | |

Figure 13

| | | | | | | | |
|---|---|---|---|---|---|---|---|
| Yr (0,0) | Yr (0,1) | Yr (0,2) | Yr (0,3) | Yr (0,4) | Yr (0,5) | Yr (0,6) | Yr (0,7) |
| Yr (1,0) | Yr (1,1) | Yr (1,2) | Yr (1,3) | Yr (1,4) | Yr (1,5) | Yr (1,6) | Yr (1,7) |
| Yr (2,0) | Yr (2,1) | Yr (2,2) | Yr (2,3) | Yr (2,4) | Yr (2,5) | Yr (2,6) | Yr (2,7) |
| Yr (3,0) | Yr (3,1) | Yr (3,2) | Yr (3,3) | Yr (3,4) | Yr (3,5) | Yr (3,6) | Yr (3,7) |
| Yr (4,0) | Yr (4,1) | Yr (4,2) | Yr (4,3) | Yr (4,4) | Yr (4,5) | Yr (4,6) | Yr (4,7) |
| Yr (5,0) | Yr (5,1) | Yr (5,2) | Yr (5,3) | Yr (5,4) | Yr (5,5) | Yr (5,6) | Yr (5,7) |
| Yr (6,0) | Yr (6,1) | Yr (6,2) | Yr (6,3) | Yr (6,4) | Yr (6,5) | Yr (6,6) | Yr (6,7) |
| Yr (7,0) | Yr (7,1) | Yr (7,2) | Yr (7,3) | Yr (7,4) | Yr (7,5) | Yr (7,6) | Yr (7,7) |

Figure 14

| | | | | | | | |
|---|---|---|---|---|---|---|---|
| 100 | 100 | 100 | 100 | 0 | 0 | 0 | 0 |
| 100 | 100 | 100 | 100 | 0 | 0 | 0 | 0 |
| 100 | 100 | 100 | 100 | 0 | 0 | 0 | 0 |
| 100 | 100 | 100 | 100 | 0 | 0 | 0 | 0 |
| 100 | 100 | 100 | 100 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

Figure 15

| Yr (0,0) | 100 | Yr (0,2) | 100 | Yr (0,4) | 0 | Yr (0,6) | 0 |
| 100 | Yr (1,1) | 100 | Yr (1,3) | 0 | Yr (1,5) | 0 | Yr (1,7) |
| Yr (2,0) | 100 | Yr (2,2) | 100 | Yr (2,4) | 0 | Yr (2,6) | 0 |
| 100 | Yr (3,1) | 100 | Yr (3,3) | 0 | Yr (3,5) | 0 | Yr (3,7) |
| Yr (4,0) | 100 | Yr (4,2) | 100 | Yr (4,4) | 0 | Yr (4,6) | 0 |
| 0 | Yr (5,1) | 0 | Yr (5,3) | 0 | Yr (5,5) | 0 | Yr (5,7) |
| Yr (6,0) | 0 | Yr (6,2) | 0 | Yr (6,4) | 0 | Yr (6,6) | 0 |
| 0 | Yr (7,1) | 0 | Yr (7,3) | 0 | Yr (7,5) | 0 | Yr (7,7) |

Figure 16

| 0 | 0 | 0 | 0 | 0 | 100 | 0 | 0 |
| 0 | 0 | 0 | 0 | 0 | 100 | 0 | 0 |
| 0 | 0 | 0 | 0 | 0 | 100 | 0 | 0 |
| 0 | 0 | 0 | 0 | 0 | 100 | 0 | 0 |
| 100 | 100 | 100 | 100 | 100 | 100 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

Figure 17

| Yr (0,0) | 0 | Yr (0,2) | 0 | Yr (0,4) | 100 | Yr (0,6) | 0 |
|---|---|---|---|---|---|---|---|
| 0 | Yr (1,1) | 0 | Yr (1,3) | 0 | Yr (1,5) | 0 | Yr (1,7) |
| Yr (2,0) | 0 | Yr (2,2) | 0 | Yr (2,4) | 100 | Yr (2,6) | 0 |
| 0 | Yr (3,1) | 0 | Yr (3,3) | 0 | Yr (3,5) | 0 | Yr (3,7) |
| Yr (4,0) | 100 | Yr (4,2) | 100 | Yr (4,4) | 100 | Yr (4,6) | 0 |
| 0 | Yr (5,1) | 0 | Yr (5,3) | 0 | Yr (5,5) | 0 | Yr (5,7) |
| Yr (6,0) | 0 | Yr (6,2) | 0 | Yr (6,4) | 0 | Yr (6,6) | 0 |
| 0 | Yr (7,1) | 0 | Yr (7,3) | 0 | Yr (7,5) | 0 | Yr (7,7) |

Figure 18

| 100 | 100 | 100 | 100 | 100 | 0 | 0 | 0 |
|---|---|---|---|---|---|---|---|
| 100 | 100 | 100 | 100 | 100 | 0 | 0 | 0 |
| 100 | 100 | 100 | 100 | 100 | 0 | 0 | 0 |
| 100 | 100 | 100 | 100 | 100 | 0 | 0 | 0 |
| 100 | 100 | 100 | 100 | 100 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

Figure 19

| 100 | 100 | 100 | 100 | 50 | 50 | 0 | 0 |
|-----|-----|-----|-----|----|----|---|---|
| 100 | 100 | 100 | 100 | 50 | 50 | 0 | 0 |
| 100 | 100 | 100 | 100 | 50 | 50 | 0 | 0 |
| 100 | 100 | 100 | 100 | 50 | 50 | 0 | 0 |
| 50 | 50 | 50 | 50 | 25 | 25 | 0 | 0 |
| 50 | 50 | 50 | 50 | 25 | 25 | 0 | 0 |
| 0 | 0 | 0 | 0 | 0 | 0 | 0 | 0 |
| 0 | 0 | 0 | 0 | 0 | 0 | 0 | 0 |

Figure 20

| 0 | 0 | 0 | 0 | 0 | 100 | 0 | 0 |
|---|---|---|---|---|-----|---|---|
| 0 | 0 | 0 | 0 | 0 | 100 | 0 | 0 |
| 0 | 0 | 0 | 0 | 0 | 100 | 0 | 0 |
| 0 | 0 | 0 | 0 | 0 | 100 | 0 | 0 |
| 100 | 100 | 100 | 100 | 100 | 100 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

Figure 21

| 0 | 0 | 0 | 0 | 50 | 50 | 0 | 0 |
|---|---|---|---|----|----|---|---|
| 0 | 0 | 0 | 0 | 50 | 50 | 0 | 0 |
| 0 | 0 | 0 | 0 | 50 | 50 | 0 | 0 |
| 0 | 0 | 0 | 0 | 50 | 50 | 0 | 0 |
| 50 | 50 | 50 | 50 | 50 | 50 | 0 | 0 |
| 50 | 50 | 50 | 50 | 50 | 50 | 0 | 0 |
| 0 | 0 | 0 | 0 | 0 | 0 | 0 | 0 |
| 0 | 0 | 0 | 0 | 0 | 0 | 0 | 0 |

## Figure 22

| 100 | 100 | 100 | 100 | 100 | 0 | 0 | 0 |
|-----|-----|-----|-----|-----|---|---|---|
| 100 | 100 | 100 | 100 | 100 | 0 | 0 | 0 |
| 100 | 100 | 100 | 100 | 100 | 0 | 0 | 0 |
| 100 | 100 | 100 | 100 | 100 | 0 | 0 | 0 |
| 100 | 100 | 100 | 100 | 100 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

## Figure 23

26

Figure 24

Figure 25

| 0 | 0 | 0 | 0 | 0 | 100 | 0 | 0 |
|---|---|---|---|---|-----|---|---|
| 0 | 0 | 0 | 0 | 0 | 50 | 0 | 0 |
| 0 | 0 | 0 | 0 | 0 | 100 | 0 | 0 |
| 0 | 0 | 0 | 0 | 0 | 50 | 0 | 0 |
| 0 | 100 | 50 | 100 | 50 | 100 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

Figure 26

| ur(0,0) | u(0,1) | ur(0,2) | u(0,3) |
|---------|--------|---------|--------|
| u(1,0) | ur(1,1) | u(1,2) | ur(1,3) |
| ur(2,0) | u(2,1) | ur(2,2) | u(2,3) |
| u(3,0) | ur(3,1) | u(3,2) | ur(3,3) |

Figure 27

| | | | |
|---|---|---|---|
| v(0,0) | vr(0,1) | v(0,2) | vr(0,3) |
| vr(1,0) | v(1,1) | vr(1,2) | v(1,3) |
| v(2,0) | vr(2,1) | v(2,2) | vr(2,3) |
| vr(3,0) | v(3,1) | vr(3,2) | v(3,3) |

# Figure 28

| 300 | | | | | | 361 |
|---|---|---|---|---|---|---|
| 310 | 320 | 330 | 340 | 350 | 360 | |

Figure 29.

399

400

410    411    430    431

420

Figure 30.

503    511   505

513

507    509

500

Figure 31.

**European Patent Office**

**EUROPEAN SEARCH REPORT**

Application Number

EP 05 44 7161

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 1995, no. 11, 26 December 1995 (1995-12-26) -& JP 07 222147 A (MATSUSHITA ELECTRIC IND CO LTD), 18 August 1995 (1995-08-18) Following passages are cited from full text automatic translation available at: http://dossier1.ipdl.ncipi.go.jp/AIPN/aipn_call_transl.ipdl?N0000=7413&N0120=01&N2001=2&N3001=H07-222147 * abstract * * paragraph [0017] - paragraph [0020] * * paragraph [0062] * * paragraph [0088]; figure 7 * | 1-21 | H04N7/46 |
| X | PATENT ABSTRACTS OF JAPAN vol. 1996, no. 10, 31 October 1996 (1996-10-31) -& JP 08 163562 A (MATSUSHITA ELECTRIC IND CO LTD), 21 June 1996 (1996-06-21) Following passages are cited from full text automatic translation available at: http://dossier1.ipdl.ncipi.go.jp/AIPN/aipn_call_transl.ipdl?N0000=7413&N0120=01&N2001=2&N3001=H08-163562 * abstract * * paragraph [0028] - paragraph [0030]; figures 2,3 * | 1-21 | TECHNICAL FIELDS SEARCHED (Int.Cl.7) H04N |
| X | EP 0 840 519 A (VICTOR COMPANY OF JAPAN LIMITED) 6 May 1998 (1998-05-06) * abstract * * page 5, column 8, line 20 - line 35; figure 5 * | 1-21 | |

The present search report has been drawn up for all claims

| Place of search | Date of completion of the search | Examiner |
|---|---|---|
| The Hague | 2 November 2005 | Foglia, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 44 7161

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2005

| Patent document cited in search report | | Publication date | Patent family member(s) | | Publication date |
|---|---|---|---|---|---|
| JP 07222147 | A | 18-08-1995 | JP | 3003767 B2 | 31-01-2000 |
| JP 08163562 | A | 21-06-1996 | NONE | | |
| EP 0840519 | A | 06-05-1998 | CN | 1186396 A | 01-07-1998 |
| | | | DE | 69709293 D1 | 31-01-2002 |
| | | | DE | 69709293 T2 | 13-06-2002 |
| | | | JP | 3676525 B2 | 27-07-2005 |
| | | | JP | 10136381 A | 22-05-1998 |
| | | | KR | 256859 B1 | 15-05-2000 |
| | | | US | 6141379 A | 31-10-2000 |

EPO FORM P0459

For more details about this annex : see Official Journal of the European Patent Office, No. 12/82